Europäisches Patentamt

European Patent Office

Office européen des brevets

(11) Veröffentlichungsnummer: **0 234 258**
**A1**

(12) **EUROPÄISCHE PATENTANMELDUNG**

(21) Anmeldenummer: **87100717.5**

(22) Anmeldetag: **20.01.87**

(51) Int. Cl.⁴: **B62D 33/06**

(30) Priorität: **20.02.86 DE 3605441**

(43) Veröffentlichungstag der Anmeldung:
**02.09.87 Patentblatt 87/36**

(84) Benannte Vertragsstaaten:
**AT BE CH DE ES FR GB GR IT LI NL SE**

(71) Anmelder: **M A N Nutzfahrzeuge GmbH**
**Dachauer Strasse 667 Postfach 50 06 20**
**D-8000 München 50(DE)**

(72) Erfinder: **Fuchs, Dietrich, Dr.**
**Schützenstrasse 19**
**D-8047 Karlsfeld(DE)**

(54) **Fahrerhauslagerung von Lastkraftwagen.**

(57) Fahrerhauslagerung in Lastkraftwagen, bei der zwischen Fahrerhaus (1) und Rahmen (2) an sich bekannte Schwingmetallelemente (3, 4, 3', 4) in Fahrzeuglängsrichtung und/oder in Fahrzeugquerrichtung schräg als kombinierte Druck-/Schublager angeordnet sind und der Schnittpunkt der Lagerwirklinien (10, 11, 13, 14) im Bereich des Schwerpunktes (12) des Fahrerhauses (1) liegt.

Fig.1

EP 0 234 258 A1

## Fahrerhauslagerung von Lastkraftwagen

Die Erfindung betrifft eine Fahrerhauslagerung bei Lastkraftwagen.

Die bekannten Fahrerhauslagerungen weisen überlicherweise einen kinematischen Drehpunkt direkt hinter der Stoßstange auf oder verfügen über einen sich aus rein vertikalen Freiheitsgraden der Lager ergebenden Drehpol weit unterhalb des Fahrerhausschwerpunktes. In beiden Fällen bewirken vertikale und/oder horizontale Störkräfte unter der Drehfrequenz der Räder eine Nick-Schwingungserregung des Fahrerhauses um diesen weit außerhalb des Schwerpunktes liegenden Drehpol.

Der Erfindung liegt die Aufgabe zugrunde, die durch Rundlauffehler und Unwuchten der Räder, wie auch durch Bodenunebenheiten erzeugten horizontalen und/oder vertikalen Kräfte zu eliminieren.

Dies wird erfindungsgemäß dadurch erreicht, daß zwischen Fahrerhaus und Rahmen ansich bekannte Schwingungsmetallelemente in Fahrzeuglängsrichtung schräg als kombinierte Druck/Schublager angeordnet sind. Bei dieser besonders vorteilhaften Anordnung von Schwingmetallelementen werden die hohen Druckfestigkeitswerte der Elemente -bezogen auf deren Lotrechte - mit den guten Isoliereigenschaften in deren Schubrichtung kombiniert.

Die Schrägstellung in Längsrichtung wird zweckmäßigerweise so gewählt, daß sich die Wirklinien in der Fahrzeuglängsebene im Schwerpunktbereich schneiden.

Alternativ hierzu können die Schwingmetallelemente erfindungsgemäß in der Fahrzeugquerebene betrachtet, schräg als Druck/Schublager angeordnet werden.

- Mittels dieser Schrägstellung werden Wankschwingungen aus gegensinnigen Vorderradkräften eliminiert.

Die Schrägstellung in Querrichtung wird zweckmäßigerweise so gewählt, daß sich die Wirklinien in der Fahrzeugquerebene im Schwerpunktbereich schneiden.

In Weiterbildung der Erfindung sind die Schwingmetallelemente sowohl in Fahrzeuglängsrichtung als auch in Fahrzeugquerrichtung schräg als kombinierte Druck/Schublager angeordnet.

Die Erfindung weiter ausgestaltend, wird die räumliche Schräglage der Schwingelemente so gewählt, daß der Schnittpunkt der Lagerwirklinien mit dem Schwerpunkt des Fahrerhauses zusammenfällt oder zumindestens in dessen unmittelbarem Bereich liegt. Solcherart wird eine optimale Schwingungsisolierung des Fahrerhauses erzielt.

Einem weiteren Merkmal der Erfindung zufolge können die Schwingmetallelemente im Gummibereich eine oder mehrere Zwischenscheiben aus Metall aufweisen oder auch Querbohrungen oder Schlitze. Beide Maßnahmen dienen der Veränderung der Federcharakteristik bei gleichen Schwingmetallabmessungen.

Weitere Vorteile und Merkmale der Erfindung sind den Ansprüchen, der Beschreibung und den Zeichnungen zu entnehmen.

Die Erfindung ist in einem Ausführungsbeispiel dargestellt.

Es zeigen:

Fig. 1 ein Fahrerhaus mit Lagerung am Rahmen in der Seitenansicht,

Fig. 2 ein Fahrerhaus mit Lagerung am Rahmen in der Rückansicht.

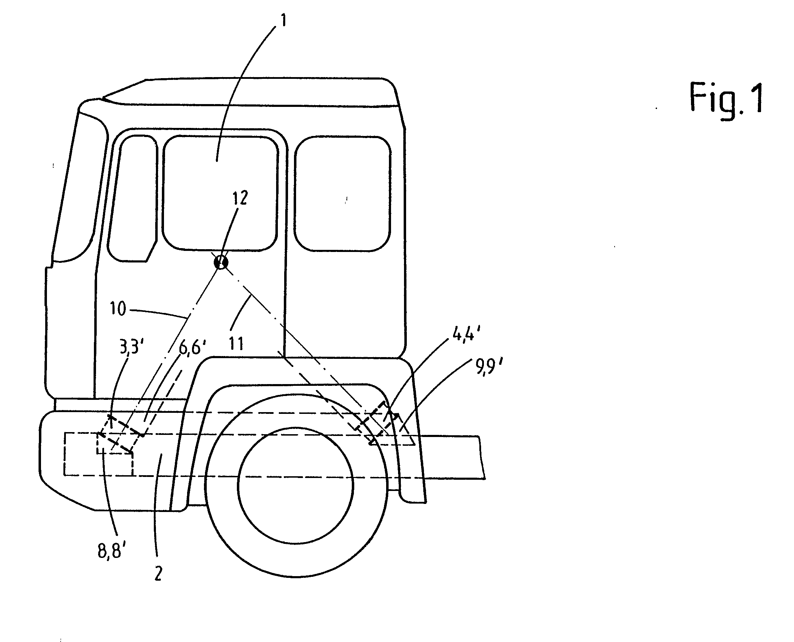

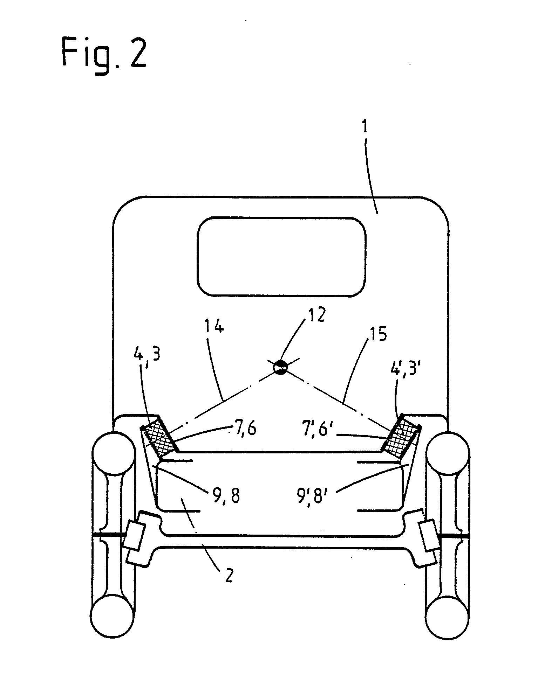

In Fig. 1 ist ein Fahrerhaus (1) eines Lastkraftwagens dargestellt, das mittels Schwingmetallelementen (3, 4 sowie 3', 4') gegenüber dem Rahmen (2) abgefedert und weitgehend schwingungsisoliert ist. Die Schwingmetallelemente stützen sich fahrerhausseitig an den Stützböcken (6, 6' und 7, 7') und an dem Rahmen an den Stützböcken (8, 8' und 9, 9') ab. Die Wirklinien (10, 11) der Schwingelemente schneiden sich in der Seitenansicht (in Fig. 1) im Schwerpunkt (12) oder im Bereich desselben, in der Hinteransicht (Fig. 2) schneiden sich die Wirklinien (14, 15) im Schwerpunkt (12) oder im Bereich desselben. Die Schwingmetallelemente sind in den Figuren vereinfacht in zwei Ebenen dargestellt. Es kann die Federcharakteristik der Schwingmetallelemente mittels ansich bekannter, den Gummibereich in Schichten unterteilender Zwischenscheiben aus Metall oder durch im Gummibereich angeordnete Querbohrungen oder Schlitze der gewünschten Federcharakteristik angepaßt werden.

Bezugszeichenliste

1 Fahrerhaus
2 Rahmen
3, 3' Schwingmetallelemente
4, 4' Schwingmetallelemente
5 -
6, 6' Stützböcke an 1
7, 7' Stützböcke an 1
8, 8' Stützböcke an 2
9, 9' Stützböcke an 2
10 Wirklinie
11 Wirklinie
12 Schwerpunkt
13 -
14 Wirklinie

15 Wirklinie

## Ansprüche

1. Fahrerhauslagerung bei Lastkraftwagen, dadurch gekennzeichnet, daß zwischen Fahrerhaus (1) und Rahmen (2) ansich bekannte Schwingmetallelemente (3, 4, 3′, 4′) in Fahrzeuglängsrichtung schräg als kombinierte Druck/Schublager angeordnet sind.

2. Fahrerhauslagerung bei Lastkraftwagen, dadurch gekennzeichnet, daß die Schwingmetallelemente (3, 4, 3′, 4′) in Fahrzeugquerrichtung, - schräg als kombinierte Druck/Schublager angeordnet sind.

3. Fahrerhauslagerung nach Anspruch 1 oder 2, dadurch gekennzeichnet, daß der Schnittpunkt der Lagerwirklinien (10, 11, 14, 15) im Bereich des Schwerpunktes (12) des Fahrerhauses (1) liegt.

4. Fahrerhauslagerung nach Anspruch 1 und 2, dadurch gekennzeichnet, daß der räumliche Schnittpunkt der Lagerwirklinien (10, 11, 14, 15) im Bereich des Schwerpunktes (12) des Fahrerhauses (1) liegt.

5. Fahrerhauslagerung nach einem oder mehreren der Ansprüche 1 bis 4, dadurch gekennzeichnet, daß die Schwingmetallelemente (3, 3′, 4, 4′) im Gummibereich eine oder mehrere dünne Zwischenscheiben aus Metall aufweisen.

6. Fahrerhauslagerung nach einem oder mehreren der Ansprüche 1 bis 5, dadurch gekennzeichnet, daß die Schwingmetallelemente (3, 3′, 4, 4′) im Gummibereich Querbohrungen oder Schlitze aufweisen.

Fig.1

# Fig. 2

Europäisches
Patentamt

**EUROPÄISCHER RECHERCHENBERICHT**

Nummer der Anmeldung

EP 87 10 0717

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 059 958 (LINDBLOM)<br>* Spalte 4, Zeilen 17-70; Spalte 5, Zeilen 5-65; Figuren 2,7,10 *<br><br>--- | 1-4 | B 62 D 33/06 |
| X | US-A-4 203 499 (TOYOTA)<br>* Insgesamt *<br><br>----- | 1,2 | |
| | | | **RECHERCHIERTE SACHGEBIETE (Int. Cl.4)**<br><br>B 62 D 33/06 |

Der vorliegende Recherchenbericht wurde für alle Patentansprüche erstellt.

| Recherchenort | Abschlußdatum der Recherche | Prüfer |
|---|---|---|
| DEN HAAG | 06-03-1987 | SCHMITTER J.M. |